(19) Europäisches Patentamt
European Patent Office
Office européen des brevets

(11) EP 0 841 744 A1

(12) EUROPEAN PATENT APPLICATION

(43) Date of publication:
13.05.1998 Bulletin 1998/20

(51) Int. Cl.$^6$: H02P 6/14

(21) Application number: 96830552.4

(22) Date of filing: 30.10.1996

(84) Designated Contracting States:
DE FR GB IT

(71) Applicant:
SGS-THOMSON MICROELECTRONICS s.r.l.
20041 Agrate Brianza (Milano) (IT)

(72) Inventors:
• Boscolo, Michele
30015 Chioggia, Venezia (IT)
• Galbiati, Ezio
26020 Agnadello, Cremona (IT)

(54) Method for driving a D.C. brushless electric motor

(57) A method of driving a brushless DC motor, of the type which comprises a rotor and a set of electric windings driven by signals with switched phases in a synchronous manner to the rotor position, is based on a synchronized system between the phase switching and the zero crossing time of a back electromotive force (BEMF) dependent on the rotor position; the phase switching time is set at an advance of 30 electric degrees to the zero crossing time of the back electromotive force (BEMF).

Fig. 6

EP 0 841 744 A1

## Description

This invention relates to a method of driving a brushless DC motor.

<u>Field of the Invention</u>

In particular, the invention relates to a method of driving a DC motor of the brushless type by means of an electronic driver circuit which can provide increased torque for a given supply voltage.

<u>Prior Art</u>

Brushless DC motors are fast finding widespread use on account of their low electric noise.

This motor type is usually driven by means of integrated circuits whose output stage, powering the winding phases, comprises a full-wave 3-phase bridge comprising six bipolar or MOS power transistors.

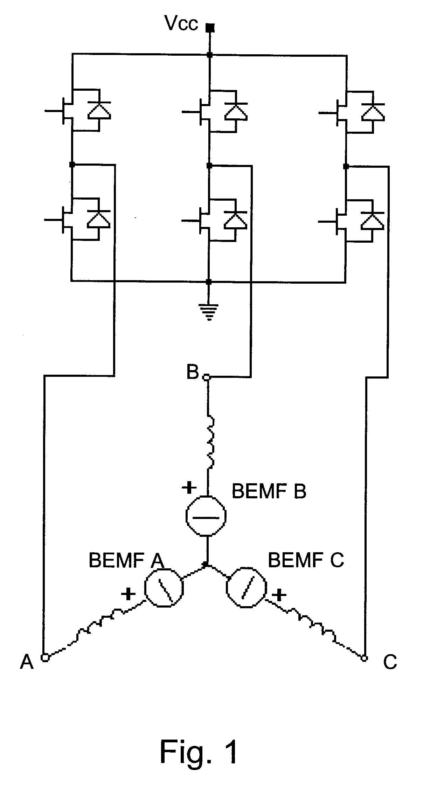

Shown in Figure 1 are an example of a driver stage as above and the equivalent diagram of a brushless DC motor connected thereto.

This type of motor is driven by exciting its phases in a suitable sequence while always keeping two phases under power and leaving disconnected the third phase (bridge output in a state of high impedance, Hi Z).

Calling A, B, C the three winding terminals, and denoting by AB\ the power supply between phase A and phase B, the potential of A being higher than that of B, the sequence to be observed in order to produce a rotation is the following:

AB\ - AC\ - BC\ - BA\ - CA\ - CB\.

To cause the motor to rotate in the opposite direction, the above sequential order is simply reversed.

For proper motor driving, the switching time of the phases should be synchronized to the instantaneous position of the rotor.

These motors are usually equipped with position sensors, e.g. Hall-effect sensors, effective to switch electronically, by means of a driver circuit, the current flow through the winding phases.

In certain cases, however, due to electromagnetic forces referred to as Back Electromotive Forces (BEMFs) being induced within the stator windings by the rotation of the permanent magnet rotor, the electric signals from such forces can be reconstructed, and the zero crossing of the signals (BEMF zero cross) can be utilized to determine the instantaneous position of the rotor. Thus, the switchings can be synchronized by using said electric signals.

Motors of the last-mentioned type have no position sensors (sensorless motors).

In general, to provide reduced torque ripple and improved system efficiency, a constant delay of 30 electric degrees is introduced between the zero-crossing time of the dropped out phase and the time when the following phase is excited. This delay is set at the motor assembly stage by suitably positioning the position transducers, or alternatively, where the rotor position is detected by reading the BEMF, the delay may be computed electronically.

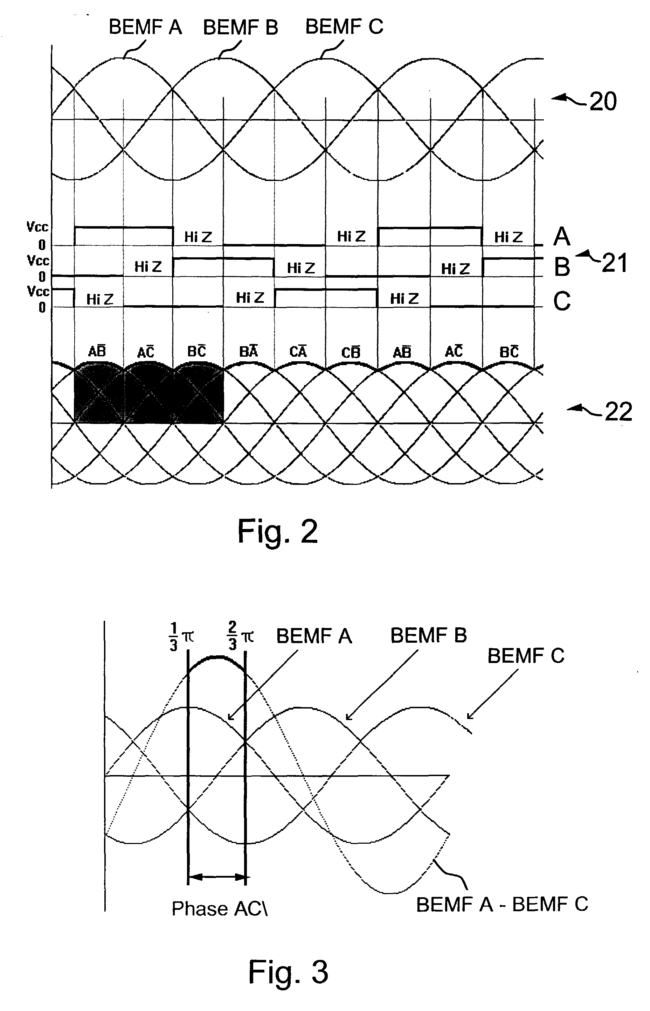

Figure 2 shows a diagram relating the shape of the motor torque curves, as obtained by exciting the phases with a delay of 30 electric degrees from the zero crossing of the dropped out phase.

The current flowing through the powered phases of the motor is:

$$I_{motor} = \frac{Vcc - (BEMF^+ - BEMF^-)}{Rm}$$

where:

Vcc is the supply voltage;

BEMF+ is the BEMF of the powered phase as connected to a plus potential;

BEMF⁻ is the BEMF of the powered phase as connected to a minus potential; and

Rm is the resistance of the motor windings as measured between phases.

Hereinafter, the quantity (BEMF⁺-BEMF⁻) will be referred to as BEMF$_{tot}$.

Since the torque generated in a motor is directly proportional to the current flowed through its windings, it can be appreciated that the motor will attain its top speed upon the value of the BEMF developed limiting the current to a value whereat the resultant torque cannot no further increase the motor speed.

For example, during the period when the phases AC\ are being powered, the resultant BEMF that is opposing the $I_{motor}$ will be given by the combined BEMF's of phase A and phase C.

Figure 3 shows plots of the resultant BEMF, designated BEMF A - BEMF C, which is opposing the current through the windings during the drive phase AC\. It can be seen from this Figure that, during the excitation phase AC\, the value of the BEMF that is opposing the current through the windings is within its maximum range, so that the opposing effect of the BEMF on the motor current has here maximum significance.

The BEMF value is dependent on the electric characteristics and the rotational speed of the motor; it can be apppreciated, therefore, that the upper speed limit only depends on the motor characteristics, for a given supply voltage. For improved performance in terms of highest attainable speed for a given applied voltage, the motor windings should be acted upon.

The underlying technical problem of this invention is a way of obtaining increased torque from a brushless DC motor for the same supply voltage, so that the aforementioned prior art limitations can be overcome.

This technical problem is solved by a drive method as indicated above and defined in the characterizing portions of Claims 1 to 7.

Summary of the Invention

The principle behind the present invention is one of providing a particular driver system for brushless motors which is based on a method of phasing the angular position of the rotor to the phase switching time which can provide improved performance in terms of torque, and hence, of maximum speed and acceleration, for a given supply voltage, over conventional drive methods.

This phasing is computed by advancing the phase switching 30 degrees to the zero crossing.

The features and advantages of the method according to the invention can be better appreciated from the following description of an embodiment thereof, illustrated by way of non-limitative example in the accompanying drawings.

Brief Description of the Drawings

Figure 1 shows an equivalent diagram of a brushless DC motor and a full-wave 3-phase bridge stage utilized for driving it.

Figure 2 shows a set of graphs having the same time base, of electric signals appearing in a conventional drive system.

Figure 3 is a plot vs. time of back electromotive forces in a conventional drive system.

Figure 4 is a set of graphs having the same time base, of electric signals appearing in a drive system embodied in accordance with the method of this invention.

Figure 5 shows a plot vs. time of the back electromotive forces in a drive system embodied in accordance with the method of this invention.

Figure 6 shows a brushless motor coupled to a control system embodied in accordance with the method of this invention.

Detailed Description

In the actual system, the phase excitation sequence always occurs in a synchronous manner with the rotor position, but unlike prior systems, the phase switching is advanced to the zero-crossing time.

By advancing the phase switching, a larger current can be forced through the motor windings, resulting in a torque being developed which is effective to increase the motor speed.

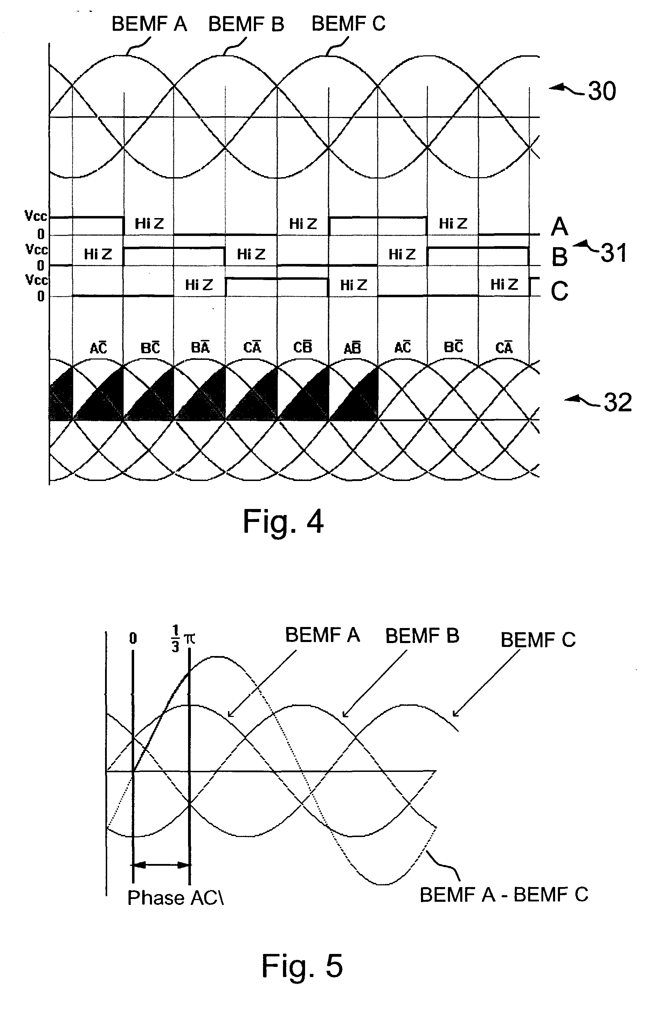

Referring to Figures 2 and 4, a direct comparison can be drawn of the method according to the invention, shown in Figure 4, with a prior instance, shown in Figure 2.

Shown in Figure 2 are, from top to bottom, the shape 20 of the back electromotive forces in the three windings A, B and C of the motor, the switching times 21 for the various phases, and the affected regions of the torque curves 22.

Phase switching occurs with a delay of 30 degrees from the zero crossing of the back electromotive force of the dropped out phase.

Figure 4 shows, on the other hand, a phase switching sequence according to the method of this invention. Taking the shape 30 of the back electromotive forces in the three motor windings A, B and C, shown in the top portion of the Figure, as a reference, the phase switching 31 is advanced 30 electric degrees to the zero-crossing positions of the back electromotive forces.

For the same current, it can be readily seen that the average torque is in the first case twice as large as in the second; in fact, in the instance of Figure 2, the resulting area from the torque curve is:

$$\int_{\pi/3}^{\pi 2/3} sinx \cdot dx = +1$$

whereas in the instance of Figure 4, it is:

$$\int_{0}^{\pi/3} sinx \cdot dx = +0.5$$

Thus, it would appear that in the prior system the torque generated in the motor is twice as large as in the instance of this invention.

This is true for equal currents being flowed through the motor but, as we shall see, a larger current can be forced into the motor if the switching is advanced 30 degrees.

Thus, a benefit can be had torque-wise when the current that can be forced is at least twice larger than that delivered to the motor with switchings retarded 30 degrees.

Going back to the formula for the motor current,

$$I_{motor} = \frac{Vcc - BEMF_{tot}}{Rm}$$

it can be seen that $BEMF_{tot}$ is indeed the current value limiting variable.

To understand how can a larger current be forced, it may suffice to refer the reader to the examples shown in Figures 3 and 5 which relate to a retarded switching of 30 degrees and an equally advanced switching from/to the zero crossing, respectively.

Plotted therein are the shape of three sine curves which are phase shifted 120 degrees from the individual BEMFs of the three phases (BEMF A, BEMF B and BEMF C), and the shape, also sinusoidal, of the

$BEMF_{tot}$ resulting from the combined individual BEMFs of phases A and C.

The $BEMF_{tot}$ is the quantity that is opposing the flow of current through the motor during the power supply phase AC\.

Hereinafter, the descriptions of the system operation will make reference to the power supply phase AC\.

For the other power supply phases, the analysis to be made would be quite similar, it merely requiring that the phases actually affected by the power supply be considered instead of the phases A and C.

Thus, the quantity $BEMF_{tot}$ will be equal to $BEMF_B$-$BEMF_C$ during the phase BC\, and so forth.

During the power supply phase AC\, the direction of the current through the motor windings will be an incoming one in phase A and an outgoing one in phase C.

During this power supply phase, the action of the total back electromotive force opposing the current flow is given by the combined BEMFs of the individual affected phases.

The opposition from the $BEMF_{tot}$, as given by the combined BEMFs of phases A and C, to the current flow through the motor extends, as shown in Figure 3, from a $1/3\pi$ angular position to a $2/3\pi$ position in the instance of the drive providing 30-degree retarded switchings from the zero crossing, whereas, as shown in Figure 5, in the instance of 30-degree advanced switchings, the opposition from the $BEMF_{tot}$ extends from the 0 angular position to a $1/3\pi$ position.

It can be seen that the BEMF that is opposing the flow of current through the motor windings during the excitation phase is much smaller in the instance of Figure 5 than in the instance of Figure 3, which allows the motor to be supplied a considerably larger average current, and a higher torque to be generated than in the prior art, especially at high rotational speeds, when the BEMF reaches high peak values.

For a given supply voltage Vcc and a conventional brushless motor, it thus becomes possible to increase the current to the motor and obtain accordingly an increase in top rotational speed and in acceleration.

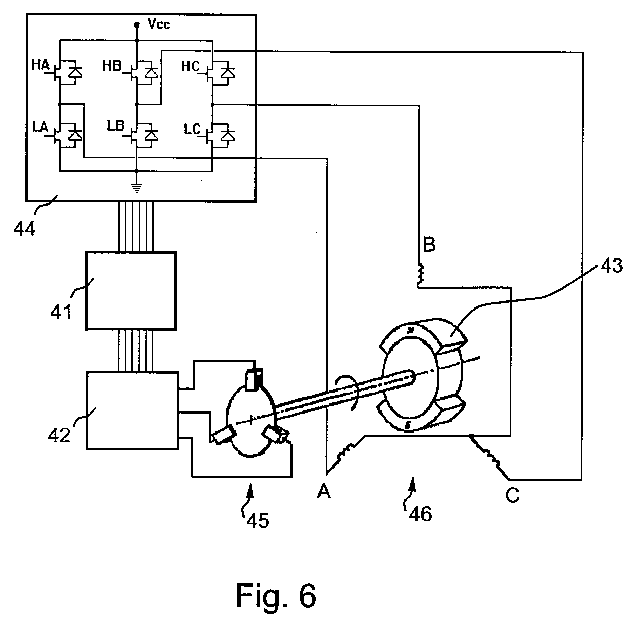

Shown in Figure 6 is an embodiment of a control system for a brushless motor, made in accordance with the method of this invention.

Generally and schematically shown at 46 is a brushless DC motor; in particular, the three electric windings A, B and C, a rotor 43 having a permanent magnet, and three Hall-effect sensors 45 are shown.

The sensors 45 are connected to a block 42 containing a switching logic whose outputs are coupled, via an optional phase-retardation block 41, to a power stage 44 driving the motor windings.

The three sensors 45 are positioned 120 degrees from each other and supply information about the instantaneous position of the rotor. The electric signals from these sensors are sinusoidal in shape and phase-shifted 120 degrees from each other, being quite similar, both in shape and phase shift, to the back electromotive forces 30 shown in figure 4.

The signals from the sensors 45 are input to a circuit block 42 containing a squaring stage and a switching logic. By squaring the signals 45, three digital signals can be obtained which, being phase shifted 120 degrees, present generally a switching every 60 degrees or $1/3\pi$. These switchings are utilized, through the combinational logic, for the phase synchronization purpose.

According to the type of motor used, there may commonly be, in fact, two types of position sensor positionings, the blocks 41 and 42 will serve slightly different functions.

In a first motor type, the sensors 45 are positioned to deliver the position signals with a delay of 30 electric degrees from the motor BEMF signals. This allows the (conventional) driver circuit to be simplified, in that the motor live phases can be synchronized to the sensor signals without retarding the drive signals.

To use these motors in the system of Figure 6, it suffices that the switching logic of block 42 in Figure 6 synchronizes the drive signals with a 60-degree advance. In this way, considering the 30-degree delay introduced by the sensor positioning, a net advance of 30 degrees is obtained, in accordance with the method of this invention.

In this case, the phase-retardation block 41 is unnecessary.

On the other hand, when a brushless motor is used wherein the sensors 45 are positioned to deliver the position signals in phase with the motor BEMF signals, the phase-retardation block 41 is needed.

In fact, if the switching logic of block 42 synchronizes the drive signals with a 60-degree advance to the position signal switchings, the retardation block 41 is to apply a delay of 30 degrees in order to provide a net advance of 30 degrees.

In addition, when the latter implementation is adopted, by varying the phase retardation of block 41, the advance angle can be varied in the 30-degree range to produce, for example, an advance of 20 degrees or 40 degrees. This allows the motor operation conditions, such as acceleration and speed, to be changed at the control designing stage, or during the motor operation if a programmable phase retarder is used.

Where a brushless motor with no integral position sensors is used instead, the same control circuit as in Figure 6 can be used by utilizing, as the input signals to the switching logic 42, the signals from the back electromotive forces as re-constructed by a specially provided detection circuit.

**Claims**

1. A method of driving a brushless DC motor of the type which comprises a rotor (43) and a set of electric windings (A,B,C) driven by signals with switched phases in a synchronous manner to the rotor position, based on a synchronized system between the phase switching and the zero crossing time of a back electromotive force (BEMF) dependent on the rotor position,

characterized in that the phase switching time is set in advance to the zero crossing time of said back electromotive force (BEMF).

2. A method according to Claim 1, characterized in that the advance of the phase switching time to the zero crossing time of the back electromotive force (BEMF) is of 30 electric degrees.

3. A method according to Claim 1, characterized in that the advance of the phase switching time to the zero crossing time of the back electromotive force (BEMF) is computed from the operating rotational speed of the motor.

4. A method according to Claim 1, characterized in that the advance of the phase switching time to the zero crossing time of the back electromotive force (BEMF) is computed from the acceleration required of the motor.

5. A method according to one of the preceding claims, characterized in that the zero crossing time of the back electromotive force (BEMF) is detected by means of integral sensors with the motor.

6. A method according to Claim 5, characterized in that the integral sensors with the motor are Hall-effect sensors.

7. A method according to one of claims 1 to 4, characterized in that the zero crossing time of the back electromotive force (BEMF) is detected by means of an electronic circuit outside the motor being coupled to the motor electric windings.

Vcc

B

+
BEMF B

BEMF A          BEMF C

+                    +

A                    C

# Fig. 1

BEMF A    BEMF B    BEMF C

Vcc
0        Hi Z              Hi Z              Hi Z       A
Vcc
0    Hi Z         Hi Z         Hi Z         B        21
Vcc
0    Hi Z         Hi Z         Hi Z         C

$A\bar{B}$   $A\bar{C}$   $B\bar{C}$   $B\bar{A}$   $C\bar{A}$   $C\bar{B}$   $A\bar{B}$   $A\bar{C}$   $B\bar{C}$

20

22

Fig. 2

$\frac{1}{3}\pi$   $\frac{2}{3}\pi$   BEMF A     BEMF B

BEMF C

Phase AC\

BEMF A - BEMF C

Fig. 3

BEMF A    BEMF B    BEMF C

← 30

← 31

| | AC̄ | BC̄ | BĀ | CĀ | CB̄ | AB̄ | AC̄ | BC̄ | CĀ |

← 32

## Fig. 4

BEMF A    BEMF B    BEMF C

Phase AC\

BEMF A - BEMF C

## Fig. 5

Fig. 6

**European Patent Office**

# EUROPEAN SEARCH REPORT

Application Number

EP 96 83 0552

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 38 19 062 A (QUICK ROTAN ELEKTROMOTOREN) 7 December 1989 * abstract; figure 1 * --- | 1 | H02P6/14 |
| A | DE 38 19 064 A (QUICK ROTAN ELEKTROMOTOREN) 7 December 1989 * abstract; figure 1 * --- | 1 | |
| A | EP 0 224 960 A (PHILIPS NV) 10 June 1987 * abstract; figure 7 * --- | 1 | |
| A | US 5 285 135 A (CAROBOLANTE FRANCESCO ET AL) 8 February 1994 * column 3, line 24 - line 38; figure 1 * --- | 1 | |
| A | US 4 864 198 A (TAKASE SHIGETO ET AL) 5 September 1989 * abstract; figures 1,3 * ----- | 1 | |

TECHNICAL FIELDS
SEARCHED       (Int.Cl.6)

H02P

The present search report has been drawn up for all claims

| Place of search | Date of completion of the search | Examiner |
|---|---|---|
| THE HAGUE | 7 March 1997 | Beyer, F |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)